(19) **Europäisches Patentamt / European Patent Office / Office européen des brevets**

(11) **EP 3 822 759 B1**

(12) **EUROPEAN PATENT SPECIFICATION**

(45) Date of publication and mention
of the grant of the patent:
**29.07.2026  Bulletin 2026/31**

(21) Application number: **20217518.8**

(22) Date of filing: **03.09.2014**

(51) International Patent Classification (IPC):
**G06F 3/0482** *(2013.01)*   **G06F 3/0485** *(2022.01)*
**G06F 3/0481** *(2022.01)*   **G06F 3/0488** *(2022.01)*
**G06F 1/16** *(2006.01)*

(52) Cooperative Patent Classification (CPC):
**G06F 1/163; G04G 21/00; G06F 3/03547;**
**G06F 3/0362; G06F 3/04817; G06F 3/0482;**
**G06F 3/04842; G06F 3/04845; G06F 3/0485;**
**G06F 3/0487; G06F 3/04883;** G06F 3/016;
G06F 3/017; G06F 2203/04806

(54) **USER INTERFACE FOR MANIPULATING USER INTERFACE OBJECTS**

BENUTZERSCHNITTSTELLE ZUR MANIPULATION VON
BENUTZERSCHNITTSTELLENOBJEKTEN

INTERFACE UTILISATEUR POUR LA MANIPULATION D'OBJETS D'INTERFACE UTILISATEUR

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **03.09.2013  US 201361959851 P
03.09.2013  US 201361873356 P
03.09.2013  US 201361873359 P
03.09.2013  US 201361873360 P**

(43) Date of publication of application:
**19.05.2021  Bulletin 2021/20**

(60) Divisional application:
**26184946.7 / 4 782 960**

(62) Document number(s) of the earlier application(s) in
accordance with Art. 76 EPC:
**19199004.3 / 3 605 286
14772001.5 / 3 047 359**

(73) Proprietor: **Apple Inc.
Cupertino, CA 95014 (US)**

(72) Inventors:
• **ZAMBETTI, Nicholas
  Largo, FL 33774-5036 (US)**
• **CHAUDHRI, Imran
  Cupertino, CA 95014 (US)**
• **DASCOLA, Jonathan, R.
  Cupertino, CA 95014 (US)**

• **DYE, Alan C.
  Cupertino, CA 95014 (US)**
• **FOSS, Christopher Patrick
  Cupertino, CA 95014 (US)**
• **GUZMAN, Aurelio
  Cupertino, CA 95014 (US)**
• **KERR, Duncan Robert
  Cupertino, CA 95014 (US)**
• **LEMAY, Stephen O.
  Cupertino, CA 95014 (US)**
• **MARIC, Natalia
  Cupertino, CA 95014 (US)**
• **WILSON, Christopher
  Cupertino, CA 95014 (US)**
• **WILSON, Eric Lance
  Cupertino, CA 95014 (US)**
• **YANG, Lawrence Y.
  Cupertino, CA 95014 (US)**
• **BUTHCHER, Gary Ian
  Cupertino, CA 95014 (US)**
• **DAVYDOV, Anton M.
  Cupertino, CA 95014 (US)**
• **EDWARDS, Dylan Ross
  Cupertino, CA 95014 (US)**
• **IVE, Jonathan P.
  Cupertino, CA 95014 (US)**
• **KING, Nicholas V.
  Cupertino, CA 95014 (US)**
• **PRESTON, Daniel Trent
  Cupertino, CA 95014 (US)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**(Cont. next page)**

• KENNEDY, Zachery
San Jose, CA 95112 (US)
• KARUNAMUNI, Chanaka G.
Cupertino, CA 95014 (US)

(74) Representative: **Zacco Denmark A/S**
**Arne Jacobsens Allé 15**
**2300 Copenhagen S (DK)**

(56) References cited:
**WO-A1-2009/084368    JP-A- 2012 252 384
US-A1- 2011 047 491    US-A1- 2012 162 261
US-A1- 2013 135 234**

## Description

### FIELD

The disclosed embodiments relate generally to user interfaces of electronic devices, including but not limited to user interfaces for electronic watches.

### BACKGROUND

Advanced personal electronic devices can have small form factors. Exemplary personal electronic devices include but are not limited to tablets and smart phones. Uses of such personal electronic devices involve manipulation of user interface objects on display screens which also have small form factors that complement the design of the personal electronic devices.

Exemplary manipulations that users can perform on personal electronic devices include navigating a hierarchy, selecting a user interface object, adjusting the position, size, and zoom of user interface objects, or otherwise manipulating user interfaces. Exemplary user interface objects include digital images, video, text, icons, control elements such as buttons, and other graphics.

Existing methods for manipulating user interface objects on reduced-size personal electronic devices can be inefficient. Further, existing methods generally provide less precision than is preferable.

The following references represent prior art relevant to the current invention:

JP 2012 252384 A discloses a UI with icons (301) on a virtual spherical body (310) . A "slide operation" (swipe) rotates the sphere, which changes the arrangement and apparent size of the icons (e.g., central icons are larger) .

WO 2009/084368 A1 discloses an interface where icons are in a "cyclic/annular" (ring) form with different sizes.

US 2013/135234 A1 discloses an interface where a "first gesture" (pinch-in/out) zooms the display area, and a "second gesture" (swipe/flick) pans the display area.

US 2011/047491 A1 discloses various menus, including a favorite menu where icons are displayed in the "shape of a ring" and can be rotated.

US 2012/162261 A1 discloses "elastic" icons that change shape based on device motion (tilting, acceleration) detected by a sensing unit.

### SUMMARY

In some embodiments, techniques for navigating a user interface on a personal electronics device based on movements of a crown are disclosed. Systems and computer-readable storage media for performing the processes described above are also disclosed.

### BRIEF DESCRIPTION OF THE DRAWINGS

FIG. 1 illustrates an exemplary personal electronic device.
FIG. 2 illustrates an exemplary user interface.
FIG. 3 illustrates an exemplary user interface.
FIG. 4 illustrates an exemplary user interface.
FIG. 5 illustrates an exemplary user interface.
FIG. 6 illustrates an exemplary user interface.
FIG. 7 illustrates an exemplary user interface.
FIG. 8 illustrates an exemplary user interface.
FIG. 9 illustrates an exemplary logical structure of a user interface.
FIG. 10 illustrates an exemplary user interface.
FIG. 11 illustrates an exemplary user interface.
FIG. 12 illustrates an exemplary user interface.
FIG. 13 illustrates an exemplary user interface transition.
FIG. 14 illustrates an exemplary user interface.
FIG. 15 illustrates an exemplary user interface.
FIG. 16 illustrates an exemplary user interface transition.
FIG. 17 illustrates an exemplary user interface.
FIG. 18 illustrates an exemplary user interface.

FIG. 19 illustrates an exemplary user interface transition.
FIG. 20 illustrates an exemplary user interface.
FIG. 21 illustrates an exemplary user interface.
FIG. 22 illustrates an exemplary user interface and transition.
FIG. 23 illustrates an exemplary user interface.
FIG. 24 illustrates an exemplary user interface and transition.
FIG. 25A and FIG. 25B illustrate an exemplary user interface.
FIG. 26 illustrates an exemplary user interface.
FIG. 27 illustrates an exemplary user interface and transition.
FIG. 28 illustrates an exemplary user interface.
FIG. 29 illustrates an exemplary user interface.
FIG. 30 illustrates an exemplary user interface and transition.
FIG. 31 illustrates an exemplary user interface.
FIG. 32 illustrates an exemplary user interface.
FIG. 33 illustrates an exemplary user interface.
FIG. 34 illustrates an exemplary user interface.
FIG. 35 illustrates an exemplary process.
FIG. 36 illustrates an exemplary computing system.
FIG. 37 illustrates an exemplary personal electronic device.
FIG. 38 illustrates an exemplary personal electronic device.
FIG. 39 illustrates an exemplary personal electronic device.
FIG. 40 illustrates an exemplary user interface.
FIG. 41 illustrates an exemplary logical structure of a user interface.
FIG. 42 illustrates an exemplary user interface.

## DETAILED DESCRIPTION

The present invention is defined by the independent claims. The dependent claims define further advantageous embodiments. It shall also be noted that the references made through this description to an "embodiment", "example", "item", "aspect" or "configuration" may point to alternative aspects related to the invention but do not necessarily correspond to real realisations of it. The actual embodiments of the invention fall within the scope of the appended claims.

In the following description of the disclosure and examples, reference is made to the accompanying drawings in which it is shown by way of illustration specific examples that can be practiced. It is to be understood that other examples can be practiced and structural changes can be made without departing from the scope of the disclosure.

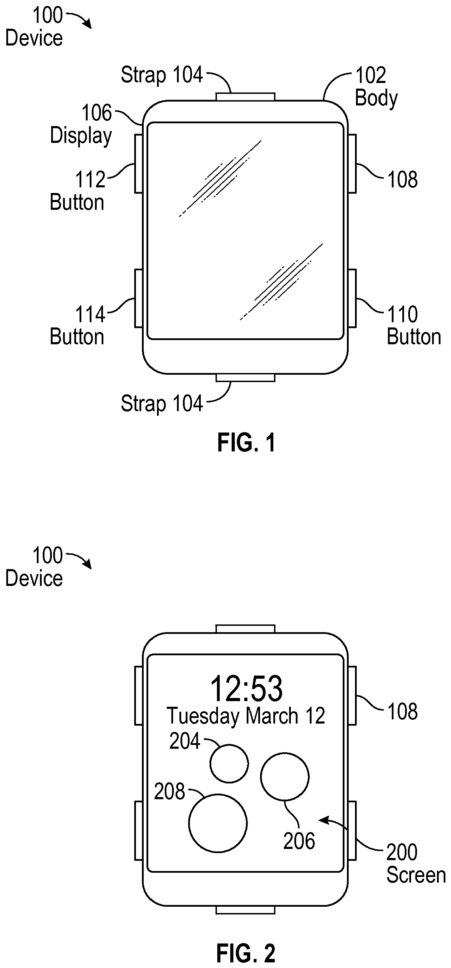

FIG. 1 illustrates exemplary personal electronic device 100. In the illustrated example, device 100 is a watch that generally includes body 102 and strap 104 for affixing device 100 to the body of a user. That is, device 100 is wearable. Body 102 can designed to couple with straps 104. Device 100 can have touch-sensitive display screen (hereafter touchscreen) 106 and crown 108. In some embodiments, device 100 can have one or more buttons 110, 112, and 114. In some embodiments, device 100 does not have buttons 110, 112, nor 114.

Conventionally, the term "crown," in the context of a watch, refers to the cap atop a stem for winding the watch. In the context of a personal electronic device, the crown can be a physical component of the electronic device, rather than a virtual crown on a touch sensitive display. Crown 108 can be mechanical meaning that it can be connected to a sensor for converting physical movement of the crown into electrical signals. Crown 108 can rotate in two directions of rotation (e.g., forward and backward). Crown 108 can also be pushed in towards the body of device 100 and/or be pulled away from device 100. Crown 108 can be touch-sensitive, for example, using capacitive touch technologies that can detect whether a user is touching the crown. Moreover, crown 108 can further be rocked in one or more directions or translated along a track along an edge or at least partially around a perimeter of body 102. In some examples, more than one crown 108 can be used. The visual appearance of crown 108 can, but need not, resemble crowns of conventional watches. There examples described herein refer to crown rotations, pushes, pulls, and/or touches, each of which constitutes a physical state of the crown.

Buttons 110, 112, and 114, if included, can each be a physical or a touch-sensitive button. That is, the buttons may be, for example, physical buttons or capacitive buttons. Further, body 102, which can include a bezel, may have predetermined regions on the bezel that act as buttons.

Touchscreen 106 can include a display device, such as a liquid crystal display (LCD), light-emitting diode (LED) display, organic light-emitting diode (OLED) display, or the like, positioned partially or fully behind or in front of a touch sensor panel implemented using any desired touch sensing technology, such as mutual-capacitance touch sensing, self-capacitance touch sensing, resistive touch sensing, projection scan touch sensing, or the like. Touchscreen 106 can allow a user to perform various functions by touching over hovering near the touch sensor panel using one or more fingers or other object.

In some examples, device 100 can further include one or more pressure sensors (not shown) for detecting a force or pressure applied to the display. The force or pressure applied to touchscreen 106 can be used as an input to device 100 to perform any desired operation, such as making a selection, entering or exiting a menu, causing the display of additional options/actions, or the like. In some examples, different operations can be performed based on the amount of force or pressure being applied to touchscreen106. The one or more pressure sensors can further be used to determine a position that the force is being applied to touchscreen 106.

1. Crown-based user interface control

FIGs. 2-7 illustrate exemplary user interfaces that respond to movements of crown 108 (FIG. 1). FIG. 2 shows exemplary screen 200 that can be displayed by device 100. Screen 200 can be, for example, a home screen that appears upon power-on of device 100 or that appears initially when the touchscreen display of device 100 powers-on (including wake up from a sleep state). Icons 204, 206, and 208 can be displayed in screen 200. In some embodiments, the icons can correspond to applications operable on device 100, meaning that the applications can be installed onto and/or can execute as a service on device 100. A touch (e.g., a finger tap) on an icon causes the corresponding application to launch, meaning that the application runs in the foreground of device 100 and appears on touchscreen 106. In some embodiments, the icons can correspond to text documents, media items, web pages, e-mail messages, or the like.

Device 100 can select icons 204, 206, and 208 out of larger set of available icons for display on screen 200 because these icons have information relevant to the user at the current time. For example, icon 204 can correspond to a messaging application in which the user has just received an incoming message, and icon 206 can correspond to a calendar application where the user has an upcoming calendar appointment entry.

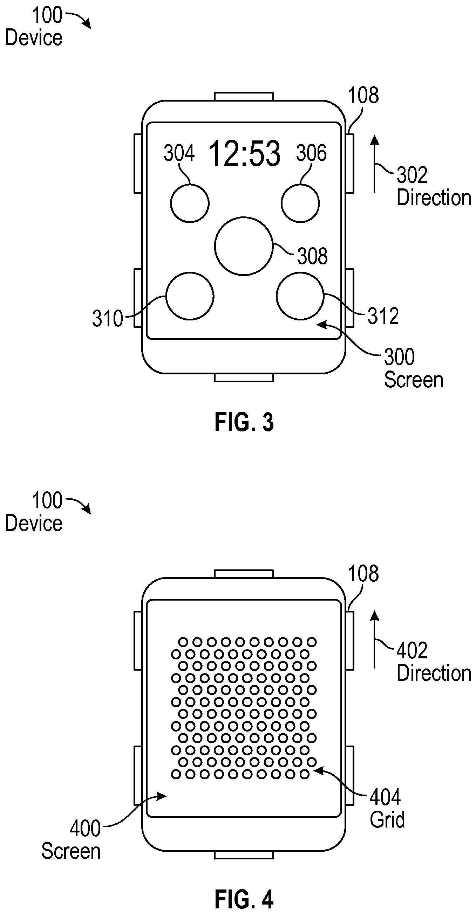

FIG. 3 shows exemplary screen 300, which can be displayed by device 100 in response to a rotation of crown 108 in direction 302 while screen 200 (FIG. 2) is displayed. Screen 300 can show, for example, a user's favorite icons, selected previously by the user from a larger set of available icons. Also, screen 300 can include icons, selected from the larger set of available icons, by device 100 based on a user's frequency of access of the icons. Exemplary icons 304, 306, 308, 310, and 312 displayed in screen 300 can each correspond to an application operable on device 100. A touch (e.g., a finger tap) on an icon causes the corresponding application to launch.

FIG. 4 shows exemplary screen 400, which can be displayed by device 100 in response to a rotation of crown 108 in direction 402 while screen 300 (FIG. 3) is displayed. Screen 400 can show, for example, icons corresponding to all of the applications operable on device 100. Because a large number of applications can be operable on device 100, screen 400 can include a large number of icons. When many icons are displayed, the icons can be sized accordingly so that they can fit within touchscreen 106, or sized so that at least a representative number or predetermined percentage of icons can fit visibly within touchscreen 106.

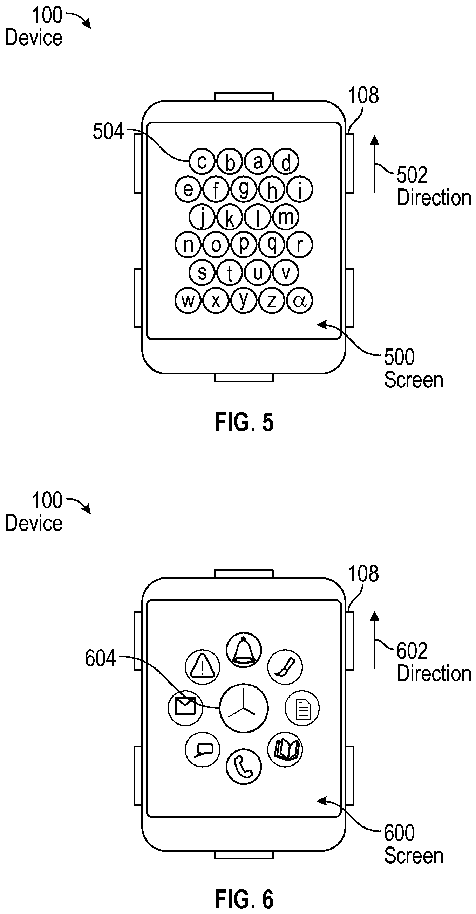

FIG. 5 shows exemplary screen 500, which can be displayed by device 100 in response to a rotation of crown 108 in direction 502 while screen 400 (FIG. 4) is displayed. Screen 500 can show, for example, icons corresponding to a subset of the applications operable on device 100. Because fewer icons are displayed on screen 500 as compared with screen 400, the icons that are displayed on screen 500, e.g., icon 504, can become larger and can have additional fidelity as compared with the display of icons on screen 400. For example, icons on screen 500 can have indicia, in the form of text and/or imagery, identifying its corresponding application. As shown, icon 504 uses the letter "c" to suggest the name of the corresponding application begins with a "c", as in clock. In some embodiments, a touch (e.g., a finger tap) on an icon causes the corresponding application to launch.

FIG. 6 shows exemplary screen 600, which can be displayed by device 100 in response to a rotation of crown 108 in direction 602. Screen 600 can show, for example, a further winnowed subset of icons, as compared with screen 500, that correspond to applications operable on device 100. Because even fewer icons are displayed on screen 600 as compared with screen 500 (FIG. 5), the icons that are displayed (e.g., icon 604) can enlarge further and can have additional fidelity as compared with the display of icons on screens 200, 300, 400, and 500. For example, icon 604 can have the image of a clock that displays the current time. In some embodiments, a touch (e.g., a finger tap) on an icon causes the corresponding application to launch.

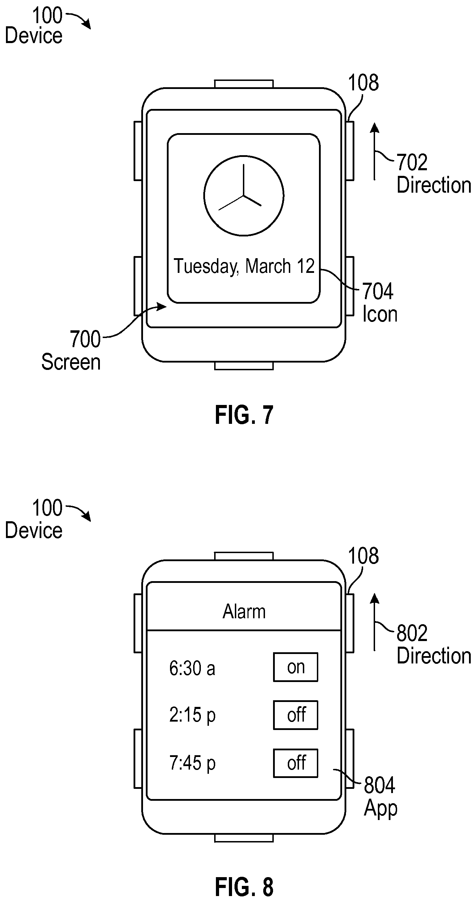

FIGs. 7 and 8 show exemplary screens 700 and 800, respectively, that can be displayed by device 100 in response to a rotation of crown 108 in direction 702 while screen 600 (FIG. 6) is displayed.

With reference to FIG. 7, in some embodiments, screen 700 can be displayed in response to crown rotation in direction 702 when screen 600 (FIG. 6) is displayed. Because a single icon 704 is displayed on screen 700, icon 704 can have additional fidelity as compared with the previous screens. For example, icon 704 can have the image of a clock that displays day-date information along with the current time. A touch (e.g., a finger tap) on icon 704 causes the corresponding application to launch.

Turning to FIG. 8, in some embodiments, screen 800 can be displayed in response to crown rotation in direction 802 when screen 600 (FIG. 6) is displayed. Screen 800 shows application 804, which corresponds to icon 704 (FIG. 7), operating in the foreground of device 100. That is, application 804 launched in response to crown rotation in direction 802. Exemplary application 804 can be a clock application that provides alarm features. Also, in some embodiments, screen 800 becomes displayed in response to crown rotation in direction 802 when screen 700 FIG. 7) is displayed.

Screens 200-700 (FIGs. 2-7) described above can be logically organized as planes of information along an axis. Under this organization, a given screen of icons can be thought of as a plane, defined by two axes (e.g., x- and y-axes), having icons spatially positioned thereon. Multiple planes can be organized along a third axis orthogonal to at least one of the x- or y-axes, called the z-axis. (The z-axis can be perpendicular to the plane formed by the x- and y-axes.)

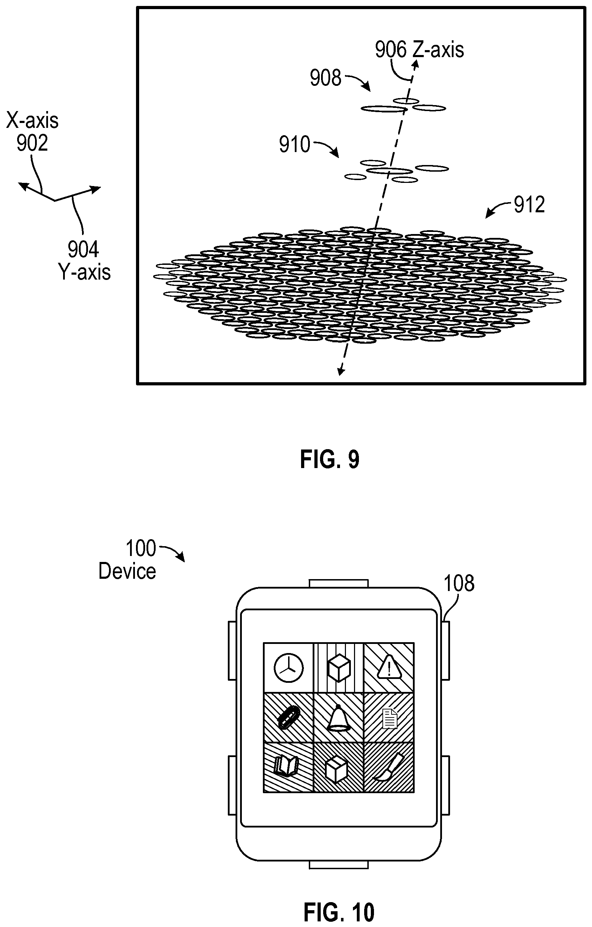

This logical organization is illustrated by FIG. 9, in which x-axis 902 and y-axis 904 form a plane co-planar with the touchscreen screen surface of device 100 (FIG. 1) and z-axis 906 is perpendicular to the x/y-plane formed by axes 902 and 904. Plane 908 can correspond to screen 200 (FIG. 2). Plane 910 can correspond to screen 300 (FIG. 3). Plane 912 can represent the collection of icons that represent the operable applications of a personal electronic device. Thus, different viewpoints of plane 912 can correspond to screens 400-700 (FIGs. 4-7). Planes 908 and 910 can be related to plane 912 in that planes 908 and 910 can each include a subset of the icons available on plane 912. The particular plane of information (i.e., screen of icons) that is to be displayed on a personal electronic device can be selected via crown movement, such as crown rotation. That is, crown movement can be used to traverse the planes of information intersecting z-axis 906, or to provide alternative views of a given plane (e.g., plane 912).

In some embodiments, when an end of the z-axis (e.g., the top or bottom-most plane) is reached via crown movement, the displayed information (e.g., screen of icons) produces a rubberband effect to indicate that the end has been reached. Consider the situation in which a user has, through crown input, reached the bottom most plane of information. As the user provides additional crown input in the same direction, the displayed collection of icons shrink (to the extent possible) in accordance with the crown movement until the movement stops. When the crown movement stops, the displayed icons return from their shrunken size back to their normal size via on-screen animation, thereby producing the visual effect of rubberbanding.

One notable benefit of this logical organization is that different planes of information need not be (but can be) zoomed subsets of one another. That is, for example, planes 908 and 910 can contain entire different icons out of those icons available on a personal electronic device, but yet the different planes of information can be accessed efficiently by a user.

Alternatively, screens 200-700 (FIG. 2-7) can be logically organized as subsets of information belonging to different modal states of a personal electronic device. Under this organization, screens 200 and 300 can correspond to first and a second modal state of the device, and screens 400-700 can correspond to a third modal state, for example. The personal electronic device can cycle through modal states in response to crown pushes, and can display screens 200 or 300 in the first and second modal states, respectively. In alternative embodiments, modal states may be cycled using buttons 110, 112, or 114. When multiple screens are available within a particular modal state (e.g., the third modal state), the device can switch from the display of one screen (e.g., 300) to another screen (e.g., 400) based on crown rotation. On-screen user interface elements, such as paging dots, can be used to indicate the availability of additional screens for display within a particular modal state.

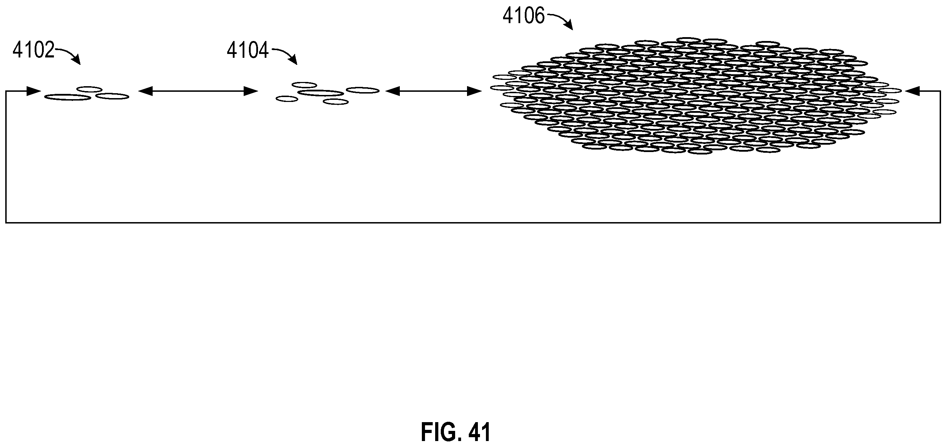

This logical arrangement is illustrated by FIG. 41. As shown, planes 4102 and 4104 can correspond to screens 200 (FIG. 2) and 300 (FIG. 3) respectively. Plane 4106 can represent the collection of icons that represent the operable applications of a personal electronic device. Thus, different viewpoints of plane 4106 can correspond to screens 400-700 (FIGs. 4-7). The particular plane of information (i.e., screen of icons) that is to be displayed on a personal electronic device can be selected via crown movement, such as crown pushes.

2. Velocity-based crown control

Device 100 (FIG. 1) can consider the angular velocity of rotation of crown 108 (FIG. 1) in determining whether one screen of icons should be replaced with another screen of icons. Specifically, device 100 can require crown 108 to rotate above a predetermined angular velocity before changing the display of one screen of icons to another. In this way, while slow rotations of crown 108 that are unintended by a user can still cause device 100 to receive crown input indicating angular displacement, the displacement need not be interpreted as having sufficient velocity to cause user interface updates that are unintended. The selection of predetermined angular velocities for this purpose can depend on a number of factors, such as the density of icons currently displayed, the visual arrangement of icons currently displayed, and so forth.

In some embodiments, the minimum angular velocity of crown rotation that is necessary to switch between screens of icons corresponds directly to the instantaneous angular velocity of crown 108 (FIG. 1), meaning that the user interface of device 100, in essence, responds when crown 108 reaches a sufficient angular velocity. In some embodiments, the minimum angular velocity of crown rotation necessary for switching between screens of icons is a calculated velocity that is based on, but not directly equal to, the instantaneous ("current") angular velocity of crown 108. In these embodiments, device 100 can maintain a calculated crown (angular) velocity V in discrete moments in time T according to equation 1:

$$V_T = V_{(T-1)} + \Delta V_{CROWN} - \Delta V_{DRAG}. \qquad\qquad (EQ.\ 1)$$

In equation 1, $V_T$ represents a calculated crown velocity (speed and direction) at time T, $V_{(T-1)}$ represents the previous velocity (speed and direction) at time T-1, $\Delta V_{CROWN}$ represents the change in velocity caused by the force being applied through the rotation of the crown at time T, and $\Delta V_{DRAG}$ represents the change in velocity due to a drag force. The force being applied, which is reflected through $\Delta V_{CROWN}$, can depend on the current velocity of angular rotation of the crown. Thus, $\Delta V_{CROWN}$ can also depend on the current angular velocity of the crown. In this way, device 100 can provide user interface interactions based not only on instantaneous crown velocity but also based on user input in the form of crown movement over multiple time intervals, even if those intervals are finely divided. Note, typically, in the absence of user input in the form of $\Delta V_{CROWN}$, $V_T$ will approach (and become) zero based on $\Delta V_{DRAG}$ in accordance with EQ. 1, but $V_T$ would not change signs without user input in the form of crown rotation ($\Delta V_{CROWN}$).

Typically, the greater the velocity of angular rotation of the crown, the greater the value of $\Delta V_{CROWN}$ will be. However, the actual mapping between the velocity of angular rotation of the crown and $\Delta V_{CROWN}$ can be varied depending on the desired user interface effect. For example, various linear or non-linear mappings between the velocity of angular rotation of the crown and $\Delta V_{CROWN}$ can be used. In another example, the mapping can depend on the number of icons and/or icon arrangement currently being displayed.

Also, $\Delta V_{DRAG}$ can take on various values. For example, $\Delta V_{DRAG}$ can depend on the velocity of crown rotation such that at greater velocities, a greater opposing change in velocity ($\Delta V_{DRAG}$) can be produced. In another example, $\Delta V_{DRAG}$ can have a constant value. In yet another example, $\Delta V_{DRAG}$ can be based on the number of current displayed icons and/or the currently displayed icon arrangement. It should be appreciated that the above-described requirements of $\Delta V_{CROWN}$ and $\Delta V_{DRAG}$ can be changed to produce desirable user interface effects.

As can be seen from EQ. 1, the maintained velocity ($V_T$) can continue to increase as long as $\Delta V_{CROWN}$ is greater than $\Delta V_{DRAG}$. Additionally, $V_T$ can have non-zero values even when no $\Delta V_{CROWN}$ input is being received, meaning that user interface screens can continue to change without the user rotating the crown. When this occurs, screens can stop changing based on the maintained velocity at the time the user stops rotating the crown and the $\Delta V_{DRAG}$ component.

In some embodiments, when the crown is rotated in a direction corresponding to a rotation direction that is opposite the current user interface changes, the $V_{(T-1)}$ component can be reset to a value of zero, allowing the user to quickly change the direction of the screen changes without having to provide a force sufficient to offset the $V_T$.

In other embodiments, different physical crown states other than rotation of the crown are used to navigate through displayed icons.

## 3. User interface appearance

Icons can take on various visual appearances. For example, icons can be rectangular in shape, as shown in FIG. 10. As another example, icons can be circular, as shown in FIGs. 2-7. Further, icons can take on various spatial arrangement schemes, meaning that icons can be arranged along the rows and columns of an invisible grid. Grids can be symmetrical or non-symmetrical. In FIG. 10, a symmetrical grid is used, for example. In FIG. 5, a non-symmetrical grid having x icons arranged on a first row and y icons arranged along a second row is used, for example.

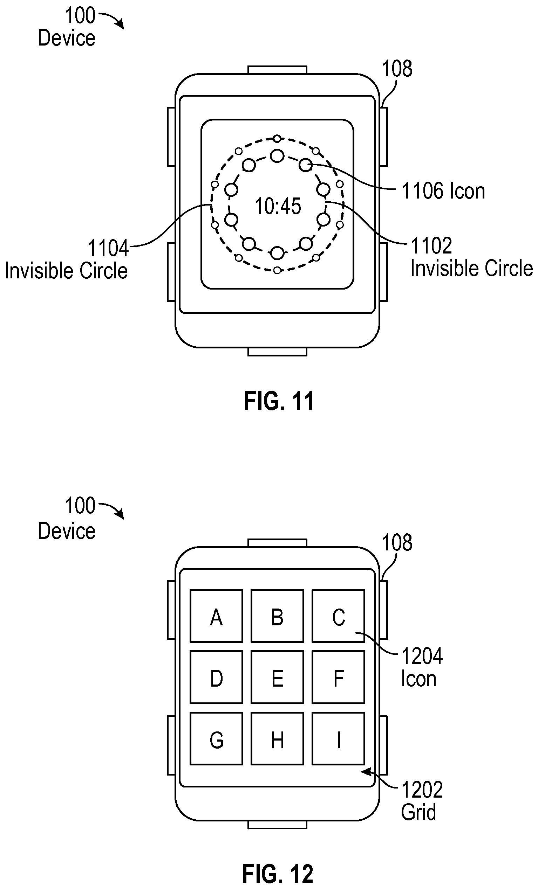

FIG. 11 illustrates a radial icon arrangement scheme where circular icons are aligned along the circumference of invisible circles 1102 and 1104 of different diameters. Invisible circles 1102 and 1104 are, but need not be, concentric. Icons, such as icon 1106, arranged along different invisible circles can have different sizes. As shown, icons arranged along invisible circle 1102 are closer to the center of device 100 and are larger than those arranged along invisible circle 1104. Also, although not illustrated in FIG. 11, icons in a radial arrangement can be arranged along more than two invisible circles.

The distance that a particular icon is position from the center of the radial icon arrangement can depend on different factors. For example, the distance can be proportional to frequency of use of the icon; an icon that is used frequently is closer to the center. As another example, the distance can depend on whether an incoming notification has been received for (the application corresponding to) the icon. As another example, the distance can be user-defined, or can be otherwise determined by device 100 (i.e., curated).

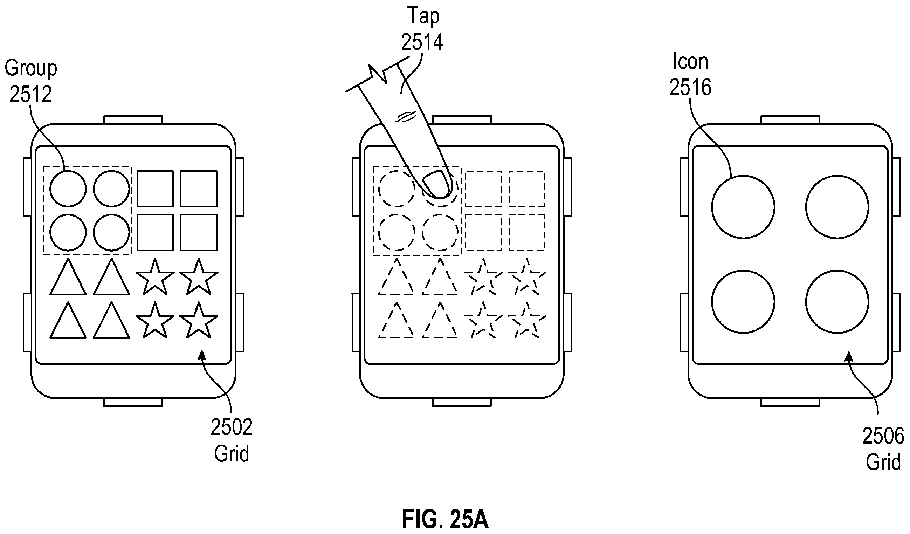

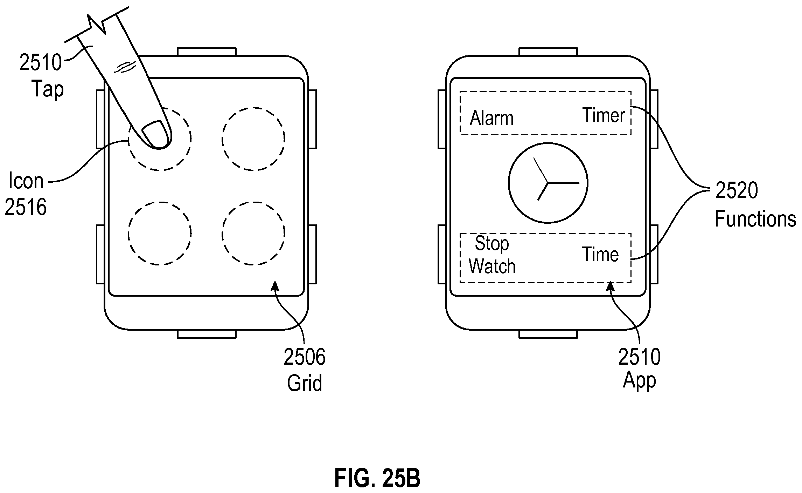

FIG. 25A illustrates an arrangement of icons into icon groups. On grid 2502, four groups of icons, including icon group 2512, are displayed. In response to a touch input, such as a finger tap at touchscreen location 2514 on group 2512, the icons within group 2512 can be displayed in enlarged form. In grid 2506, the icons within group 2512, including icon 2516, are displayed in enlarged form. FIG. 25B illustrates an arrangement of application functionalities into groups. On grid 2508, as discussed above, the four icons of icon group 2512 are displayed on grid 2506. A selection of icon 2516 (e.g., via finger tap 2518) can cause a group of functions 2520 provided by application 2510 (which corresponds to icon 2508) to be displayed.

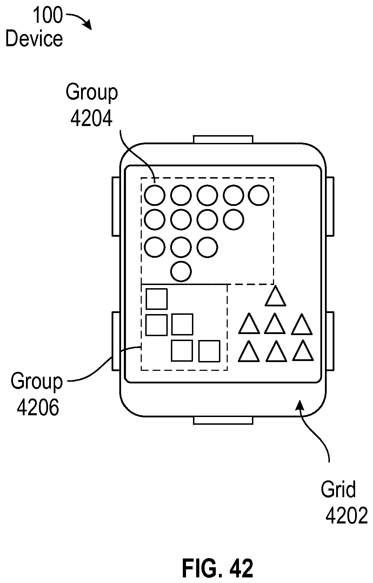

The size and shape of icon groups can be organic or defined. Icon groups that are defined, such as icon group 2512 in grid 2502 (FIG. 25A), share a predefined group size and group shape. Organic icon groups, shown in FIG. 42, can be of a user-defined group size and/or group shape. For example, icon groups 4204 and 4206 in grid 4202 are of different user-defined shapes and sizes. In some embodiments, organic icon groups are defined using software running on a computer external to the personal electronic device and downloaded onto the personal electronic device.

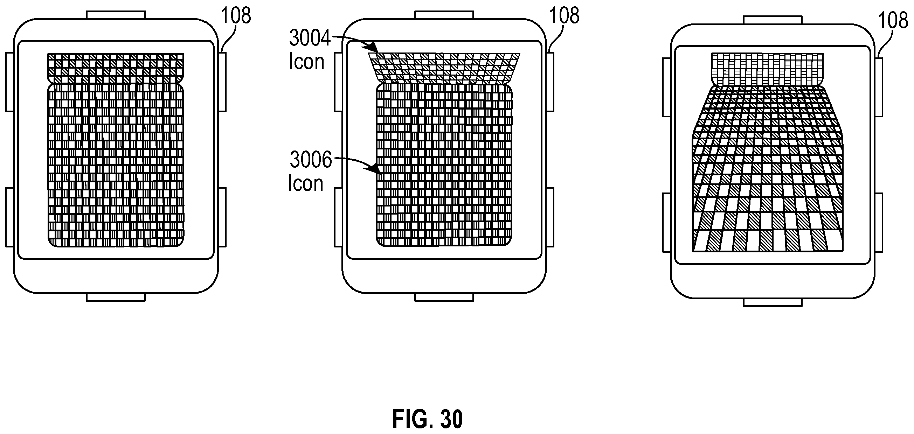

FIG. 30 illustrates an icon arrangement scheme where icons are arranged similar to pages of a rolodex. Pages of exemplary rolodex 3002 can flip in response to crown rotation. For example, page (icon) 3004 can flip downward onto page (icon) 3006 in response to a crown rotation.

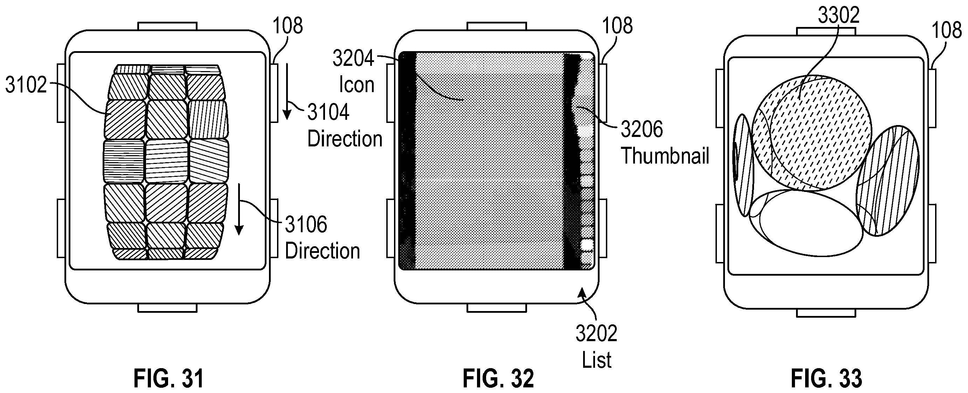

FIG. 31 illustrates an icon arrangement scheme where icons are arranged on the outer circumference of a spinning dial. Exemplary spinning dial 3102 can spin in response to crown rotation. For example, a crown rotation in direction 3104 can cause dial 3102 to spin in the same direction (3106). Also, a crown push (or pull) can change the number of columns in 3102, allowing the icons of the remaining columns to be enlarged and/or to have increased fidelity.

FIG. 32 illustrates an icon arrangement scheme in the form of a thumbnailed list 202. Icon 3204 within exemplary thumbnailed list 3202 can have corresponding thumbnail 3206. The icons of thumbnailed list 3202 can be traversed via crown rotation. A specific icon, such as icon 3204, can be selected directly for display by touching corresponding thumbnail 3206.

FIG. 33 illustrates an arrangement scheme where icons are aligned with the surface of an invisible sphere or polyhedron. Icons on the foreground surface of the invisible sphere, such as icon 3302, can be displayed. Icons on the far side of the invisible sphere's surface are not displayed. The invisible sphere can rotate in response to crown rotation and/or touchscreen input, thereby changing the specific icons that are displayed.

During operation, device 100 (FIG. 1) can use one or more of the icon arrangement schemes described above. The particular arrangement(s) used by device 10 can be user-selected and/or system-selected. That is, a user may be permitted to identify one or more preferred arrangements for display. Also, arrangements can be selected by device 100 based on criteria such as the total number of applications installed on the device, the number frequently accessed icons, and so forth.

Further, the specific ordering and placement of icons within a particular icon arrangement scheme can be user-selected and/or system-selected. For example, a user can be permitted to specify the position of an icon on a given screen. Also, icon placement can be determined by device 100 (i.e., curated) based on criteria such as the frequency of use of particular icons, a calculated relevance, and so forth.

4. Responses to user input

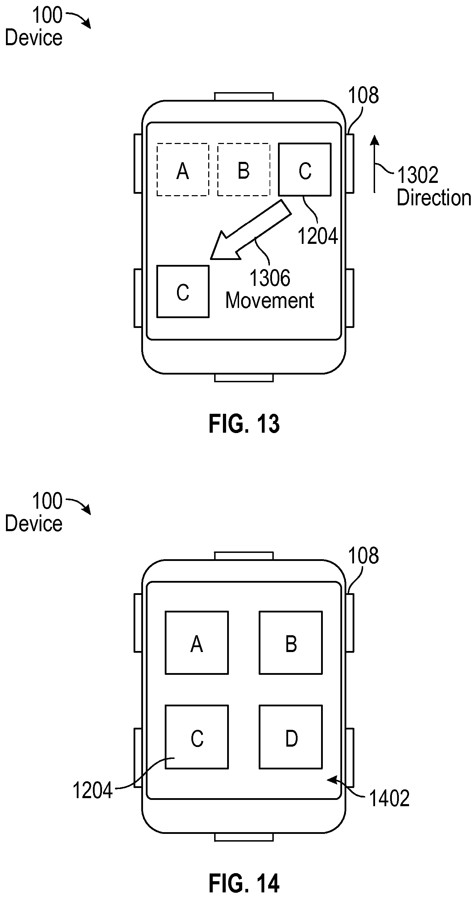

Displayed icons can respond to user input. FIGs. 12-14 illustrate a rearrangement of displayed icons in response to crown rotation. In FIG. 12, nine icons are displayed along a 3-by-3 symmetric grid 1202. Icon 1204 is displayed in the top-right position of grid 1202. As discussed above with respect to FIGs. 4-7, a rotation of crown 108 can cause device 100 to reduce the number of displayed icons. For example, a rotation of crown 108 can cause device 100 to display a 2-by-2 grid, thereby reducing the number of displayed icons. FIG. 13 illustrates an exemplary transition to a 2-by-2 grid in response to a crown rotation in direction 1302. As shown, in response to crown rotation 1302, icon 1204 is translated visibly on-screen from its top-right position in the 3-by-3 grid of FIG. 12 to its new position in the 2-by-2 grid to be displayed. Specifically, as shown in FIG. 14, icon 1204 is translated to the lower-left corner of 2-by-2 grid 1402. Further, icons that are to remain displayed in the 2-by-2 grid after the transition from grid 1202 are enlarged and positioned into the 2-by-2 grid 1402.

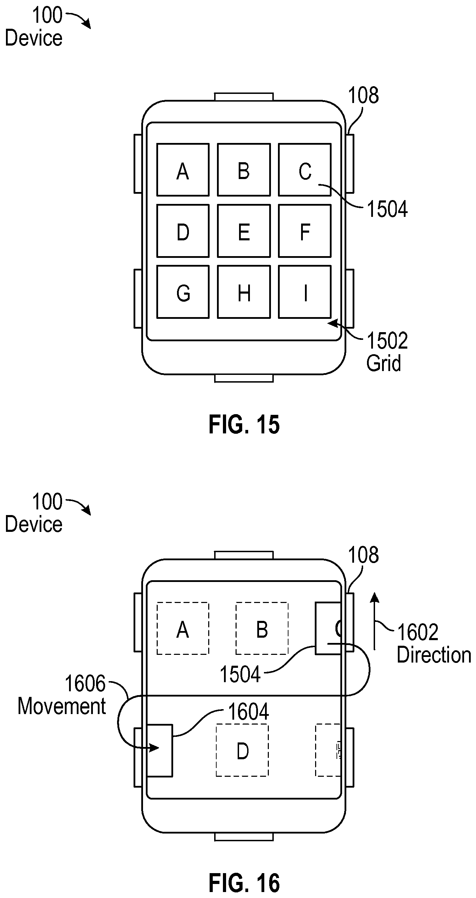

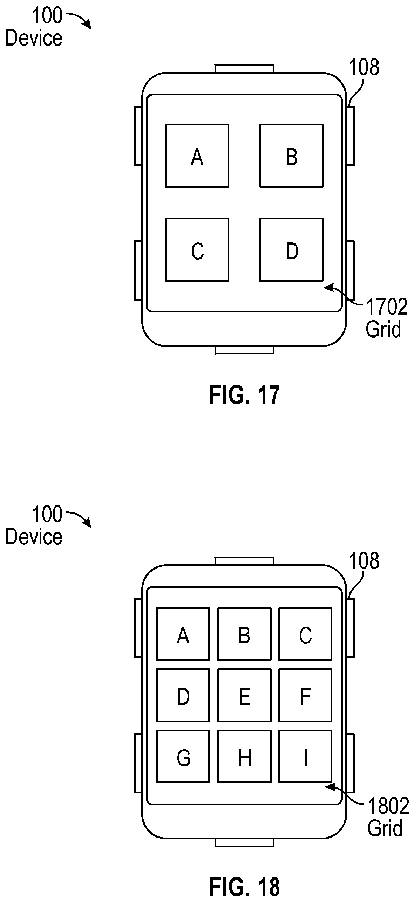

FIGs. 15-17 illustrate another rearrangement of icons in response to crown rotation. In FIG. 15, nine icons are displayed along a 3-by-3 symmetric grid 1502. Icon 1504 is displayed in the top-right position of grid 1502. As shown in FIG. 16, in response to crown rotation 1602, icon 1504 is translated off-screen from its position in grid 1502 (FIG. 15) while it is translated into its new position in the 2-by-2 grid to be displayed. To put another way, during the transition illustrated by FIG. 16, icon 1504 can be split into two portions that are displayed in two separate, non-abutting positions of the touchscreen of device 100. More specifically, while one portion of icon 1504 remains partially displayed in the top-right corner as icon 1504 is translated off-screen, the remaining portion of 1504 is partially displayed in the lower-left corner as it is translated on-screen. As shown in FIG. 17, icon 1504 is translated to the lower-left corner of 2-by-2 grid 1702. Further, icons that are to remain displayed in the 2-by-2 grid after the transition from grid 1502 are enlarged and positioned into the 2-by-2 grid 1702.

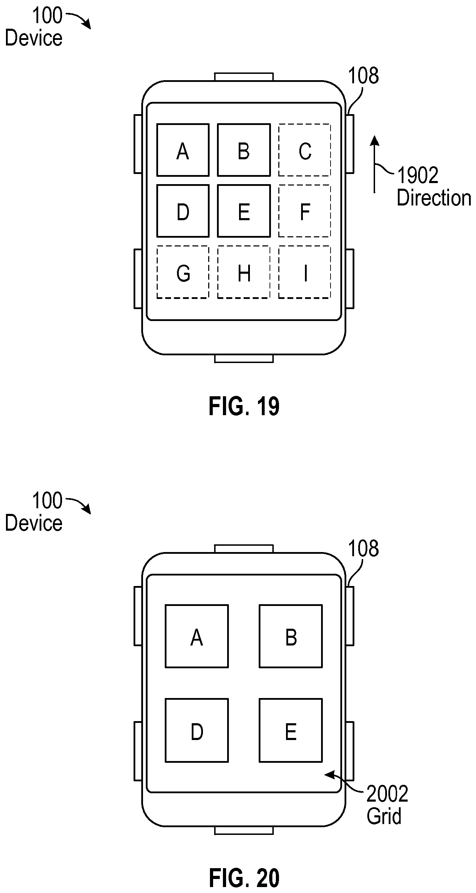

FIGs. 18-20 illustrate another rearrangement of icons in response to crown rotation. In FIG. 18, nine icons are displayed along a 3-by-3 symmetric grid 1802. As shown in FIG. 19, in response to crown rotation 1902, the icons along the right and bottom boundaries of grid 1802 (FIG. 18) are removed from display while the remaining icons are enlarged. The remaining icons are displayed enlarged as shown in grid 2002 of FIG. 20.

It should be noted that in the exemplary screens shown in FIGs. 12-20, the icon displayed in the upper-left corner (i.e., marked "A") is anchored, meaning that the above-described transitions do not cause the icon to move away from the upper-left corner. It is possible, however, to unanchor such an icon through user input, as discussed below.

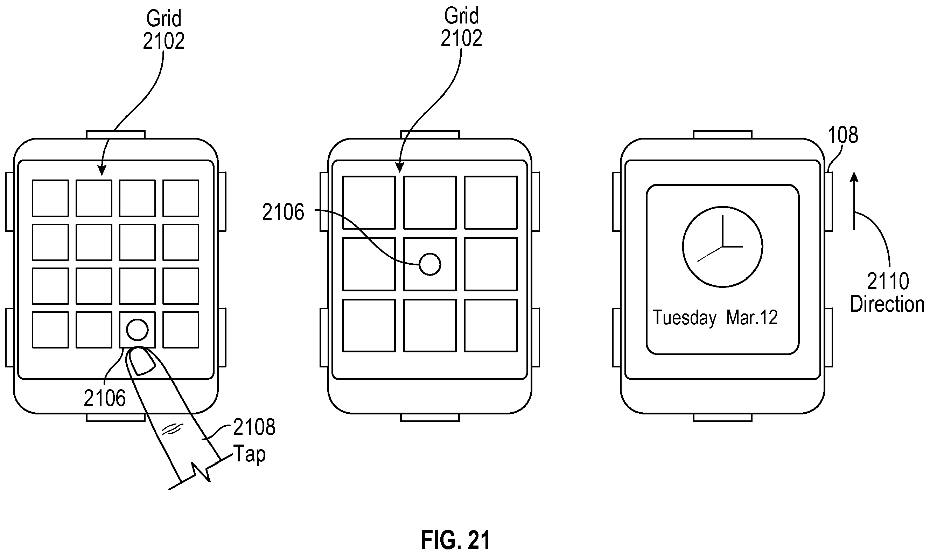

FIG. 21 illustrates a rearrangement of icons in response to touchscreen input. As shown, icon 2106 is displayed in the bottom row of 4-by-4 grid 2012. In response to a finger tap 2104 on icon 2106, 3-by-3 grid 2108 is displayed with icon 2106 enlarged in the center. Notably, the icon marked "A," which is displayed in grid 2012, is no longer displayed in grid 2108. FIG. 21 also illustrates an update of displayed icons in response to crown rotation. Specifically, in response to crown rotation 2110, icon 2106 is further enlarged and becomes the only icon displayed on-screen.

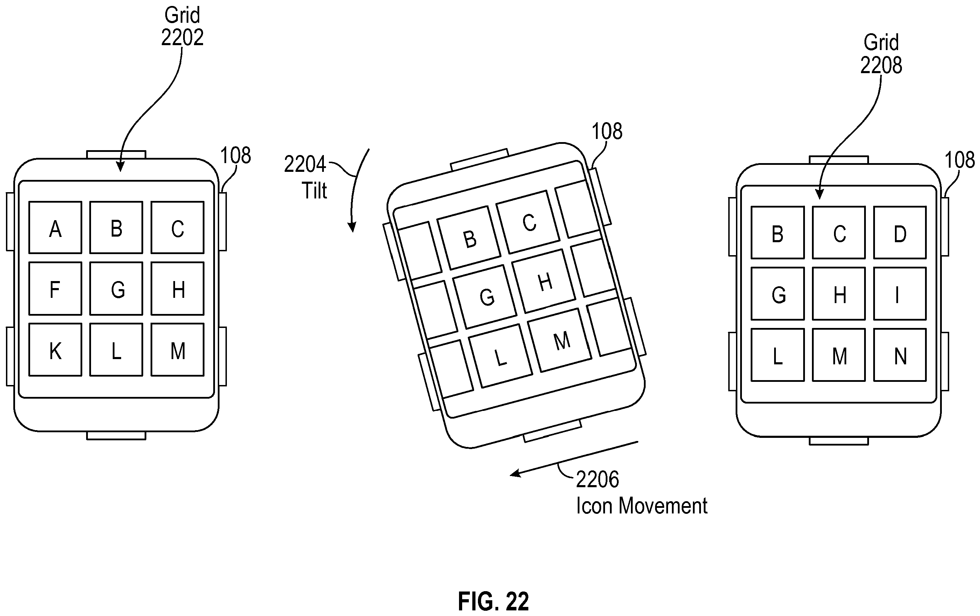

FIG. 22 illustrates a rearrangement of icons in response to movement of device 100. Device movement can be detected using one or more sensors, for example, a gyroscope. As shown, various icons are displayed in grid 2202. In response to tilting of device 100 in direction 2204, the displayed icons are translated in direction 2206, resulting in the display of different icons in grid 2208. Specifically, in response to the leftward tilting of device 100 in direction 2204, the icons of grid 2202 translate in the left direction 2206. In some embodiments, the translation may be incremental such that a single row or column transitions off a single row or column transitions onto the display. Alternatively, a whole screen of icons may transition off as a completely new set of icons transition onto the display.

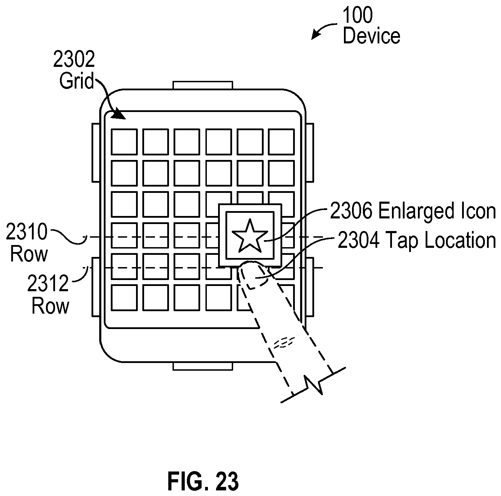

FIG. 23 illustrates a change in icon appearance in response to touchscreen input. As shown, in response to a touch at location 2304, icon 2306 becomes enlarged. Notably, icon 2306 is not located at location 2304, rather, icon 2306 (in its unenlarged state) is in row 2310 above touch location 2304 which is along row 2312. In this way, user visibility of icon 2306 is improved both because the icon is enlarged and because the icon is not blocked from view by the potentially opaque object that is touching device 100. It should be noted that more than one icon can be enlarged in response to a nearby touch. Multiple icons can be enlarged at different levels of magnification inversely proportional to the distance between each icon being enlarged and the touch location.

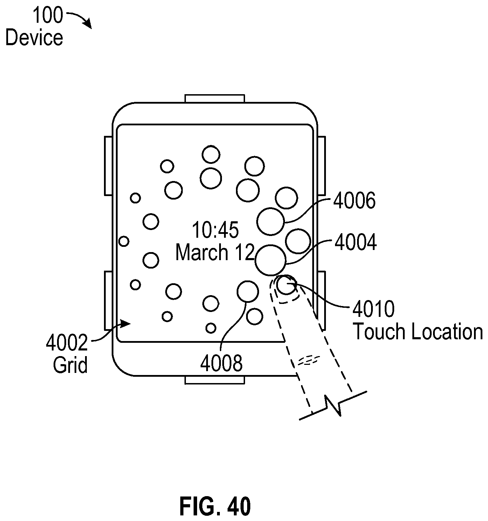

FIG. 40 illustrates icon movements that account for physical interaction between nearby icons. As shown, grid 4002 includes a number of icons arranged in a radial arrangement. In response a touch input at location 4010, a number of icons are enlarged to at different levels of magnification. Notably, the enlarging of icon 4004 can cause adjacent icons 4006 and 4008 to move away from icon 4004 so the icons do not block each other from view.

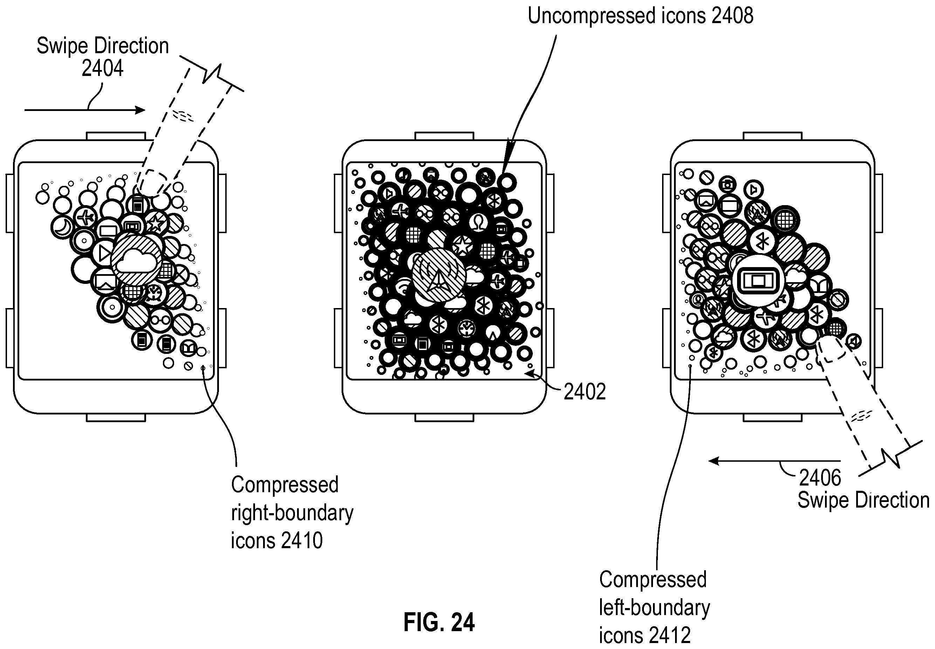

FIG. 24 illustrates icon movements that account for interaction between icons and grid boundaries. As shown, a number of icons are displayed according to non-symmetrical grid 2402. The displayed icons include uncompressed icons 2408. In response to touch input in the form of a rightward gesture in direction 2404, icons on the right boundary of grid 2402 can be compressed into compressed icons 2406 so that icons from the left side of grid 2402 are more predominately displayed either in enlarged or unenlarged form. Also, in response to a touch gesture in the leftward direction 2406, icons that are on the left boundary of grid 2402 can be compressed into compressed icons 2412 so that icons from the right side of grid 2402 are more predominately displayed. The above-described interaction allows all, or substantially all, icons to be simultaneously displayed while allowing a user to easily view and select an icon. Note that this compression may occur in a symmetrical grid, although not shown.

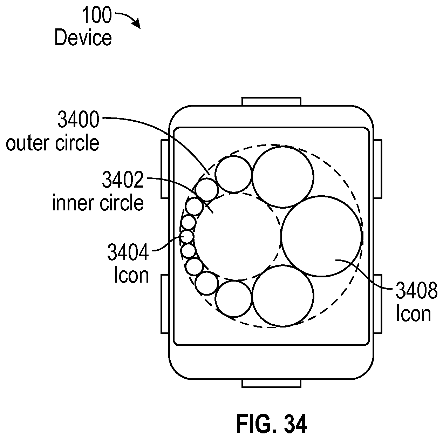

FIG. 34 illustrates icon movements that account for interaction between grid boundaries and nearby icons. In the radial arrangement of FIG. 34, icons are arranged between invisible inner circle 3402 and invisible outer boundary circle 3400. Outer circle 3400 can be sized based on the physical size the touchscreen of device 100. Inner circle 3402 can be sized based on design and/or user preferences. Inner circle 3402 can also be sized based on user input, such as a crown rotation. Inner circle 3402 can respond to touchscreen input within its surface area. For example, a touch down that occurs within the surface area of inner circle 3402 and subsequent touch movement can be interpreted as panning of inner circle 3402. When inner circle 3402 is panned, the icons that are arranged between the inner circle 3402 and outer circle 3400, such as icons 3404 and 3408, can be resize based on the available spacing between inner circle 3402 and outer circle 3400, the number of icons being displayed, and the sizes of adjacent icons. For example, in response to the rightward panning of circle 3402, icon 3404 can increase in size, and the enlarging of icon 3404 can cause icon 3408 to decrease in size.

Note, in the absence of user input, displayed icons can be programmed to move on-screen to prevent screen burn-in. Also, icon arrangements can respond to multi-touch gestures. For example, a two-finger downward gesture on the touchscreen of device 100 (FIG. 1) can cause the display of system information such as a status bar. As another example, a two-finger gesture in which the two fingers move in opposite directions can configure device 100 (FIG. 1) for left-handed or right-handed use.

5. Additional features

Turning back to FIG. 2, home screen 200 can display system-generated information such as alerts. For example, home screen 200 can display a reminder that the user has sat for an extended duration and exercise is in order. Also, screen 200 can display a suggestion for rest because the user has a busy calendar for the next morning. Also turning back to FIG. 3, screen 300 can be displayed when device 100 is coupled with a dock.

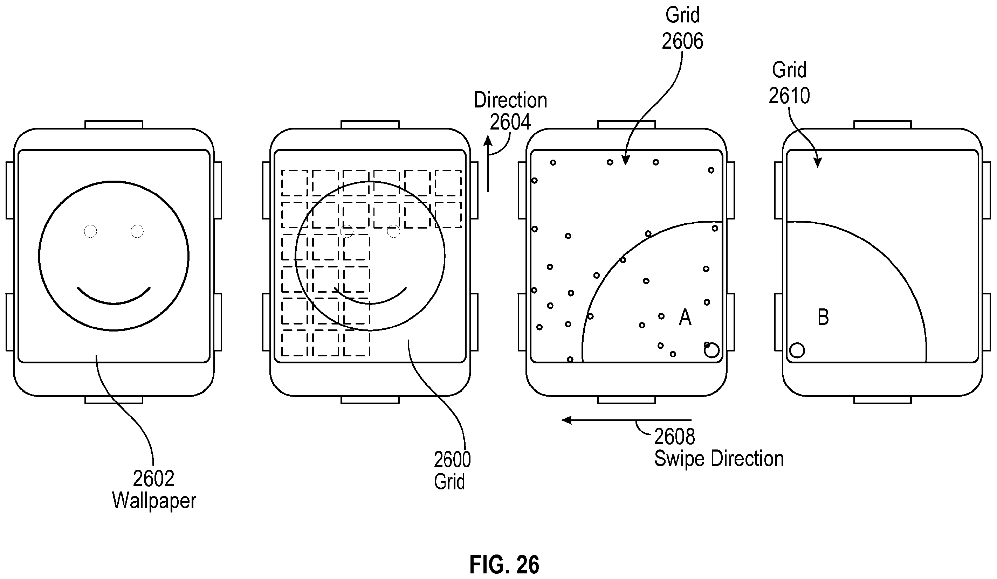

FIG. 26 illustrates the use of wallpaper 2602 to aid user navigation in a grid of icons. As shown, grid 2600 has a relatively large number of icons. In response to crown rotation 2604, a subset of the icons from grid 2600 is enlarged and displayed in grid 2606. In addition, the corresponding portion of wallpaper 2602 displayed in the background of the subset is also displayed, meaning that, for example, if icons from the upper-left quadrant of grid 2600 become displayed in grid 2606, then the upper-left quadrant of wallpaper 2602 is also displayed with grid 2606. Also as shown, in response to a touch gesture in leftward direction 2608, device 100 can display another subset of icons from grid 2600. For example, in grid 2610, icons from the upper-right quadrant of grid 2600 are displayed together with the upper-right quadrant of wallpaper 2600. In this way, a user can determine the relationship between a set of currently displayed icons relative to the totality of icons available for display on device 100.

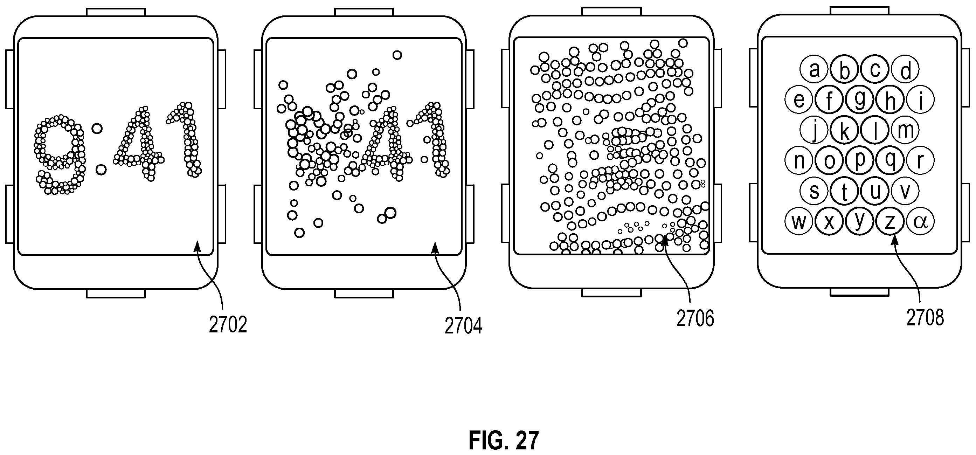

FIG. 27 illustrates an exemplary arrangement of icons where the arrangement provides information, for example current time information, to a user. The arrangement can be displayed in response to crown movement. Also, the arrangement can be displayed after a predetermined period of user input inactivity. For example, screen 2702, which uses icons in small sizes to show the current time, can be displayed after a predetermined period of user input inactivity. Further, in response to a crown rotation, screen 2702 can transition through screens 2704 and 2706 to screen 2708, which shows a grid of icons.

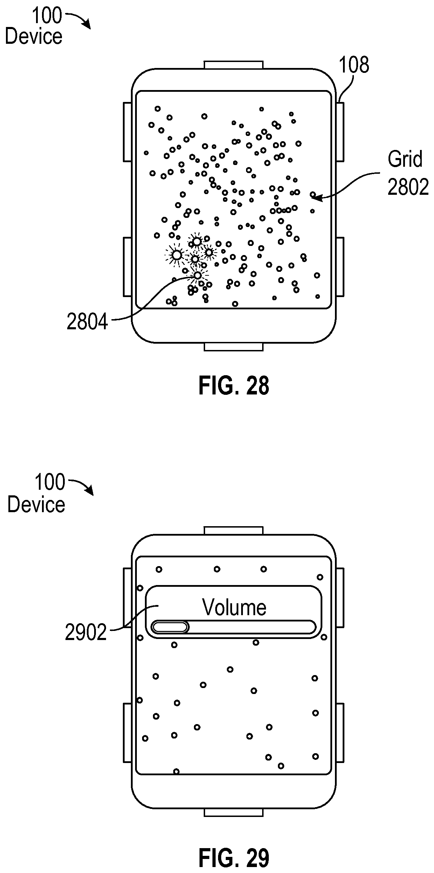

FIG. 28 illustrates an exemplary arrangement of icons (grid 2802) where the color and/or intensity of displayed icons can change in response to incoming information. For example, icon 2804 corresponding to a messaging application can blink or glow when a new message arrives. In some embodiments, the blink or glow can correspond to the popularity of an application in an application store or frequency of use of the application in a larger ecosystem of users. Further, the icons of grid 2802 can show icons representing a larger set of applications available in an application store, beyond those applications that are installed

FIG. 29 illustrates an exemplary display of a contextual message. A contextual message can be displayed in response to detection of a user's touch of crown 108. A contextual message indicates the current functionality of crown 108, which can take on different functions depending on the application that is currently operating in the foreground of device 100. For example, when a music application is operating in the foreground of device 100, a touch on crown 108 can result in the display of contextual message 2902 in the form of a volume indicator, which can indicate to a user that the current functionality of crown 108 is volume control.

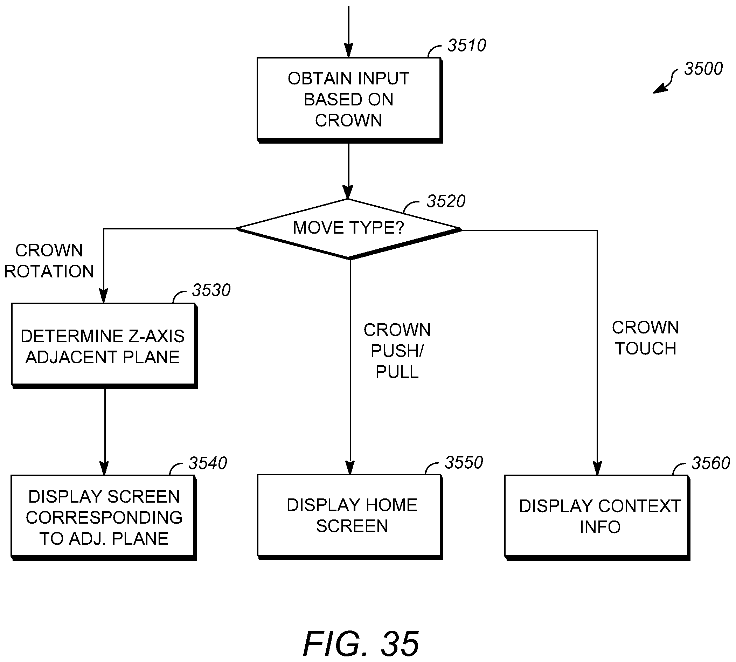

FIG. 35 depicts exemplary process 3500 for providing the user interface techniques described above. At block 3510, input based on crown movement and/or crown touch is received. The crown movement can be a rotation, a push, and/or a pull. At block 3520, a decision is made based on the type of crown movement represented by the received input. If the received input represents a crown rotation, processing proceeds to block 3530. If the received input represents a crown push or pull, processing proceeds to block 3550. If the received input represents a crown touch (without a rotation or a push/pull), processing proceeds to block 3560. At block 3530, the currently displayed screen and its corresponding position along z-axis 906 (FIG. 9) can be determined. In addition, an adjacent level of information along the z-axis 906 can be determined. The adjacent level can be determined based on the direction of the crown rotation that is represented by the received input. A corresponding grid of icons, such as those illustrated by each of FIGs. 4-7, can be displayed. At block 3550, a home screen, such as the exemplary screen 200 of FIG. 2, can be displayed. In the alternative, a user-favorites screen, such as the exemplary screen 300 of FIG. 3, can be displayed. At block 3560, a contextual message, such as the exemplary contextual message 2902 of FIG. 29, can be displayed.

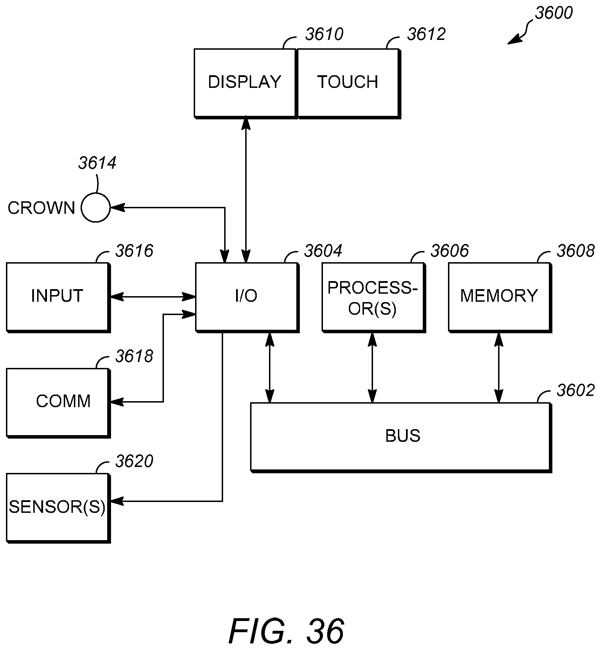

FIG. 36 depicts exemplary computing system 3600 for providing the user interface techniques described above. In some embodiments, computing system 3600 can form device 100. As shown, computing system 3600 can have bus 3602 that connects I/O section 3604, one or more computer processors 3606, and a memory section 3608 together. Memory section 3608 can contain computer-executable instructions and/or data for carrying out the above-described techniques, including process 3500 (FIG. 35). I/O section 3604 can be connected to display 3610, which can have touch-sensitive component 3612. I/O section 3604 can be connected to crown 3614. I/O section 3604 can be connected to input device 3616, which may include buttons. I/O section 3604 can be connected to communication unit 3618, which can provide Wi-Fi, Bluetooth, and/or cellular features, for example. I/O section 3604 can be connected to sensor pack 3620, which can have a gyroscope, a GPS sensor, a light sensor, a gyroscope, an accelerometer, and/or a combination thereof. Note, one or more of the above-described components can be part of a system-on-a-chip.

Memory section 3608 of computing system 3600 can be a non-transitory computer readable storage medium, for storing computer-executable instructions, which, when executed by one or more computer processors 3606, for example, can cause the computer processors to perform the user interface techniques described above, including process 3500 (FIG. 35). The computer-executable instructions can also be stored and/or transported within any non-transitory computer readable storage medium for use by or in connection with an instruction execution system, apparatus, or device, such as a computer-based system, processor-containing system, or other system that can fetch the instructions from the instruction execution system, apparatus, or device and execute the instructions. For purposes of this document, a "non-transitory computer readable storage medium" can be any medium that can contain or store computer-executable instructions for use by or in connection with the instruction execution system, apparatus, or device. The non-transitory computer readable storage medium can include, but is not limited to, magnetic, optical, and/or semiconductor storages. Examples of such storage include magnetic disks, optical discs based on CD, DVD, or Blu-ray technologies, as well as RAM, ROM, EPROM, flash memory, and solid-state memory.

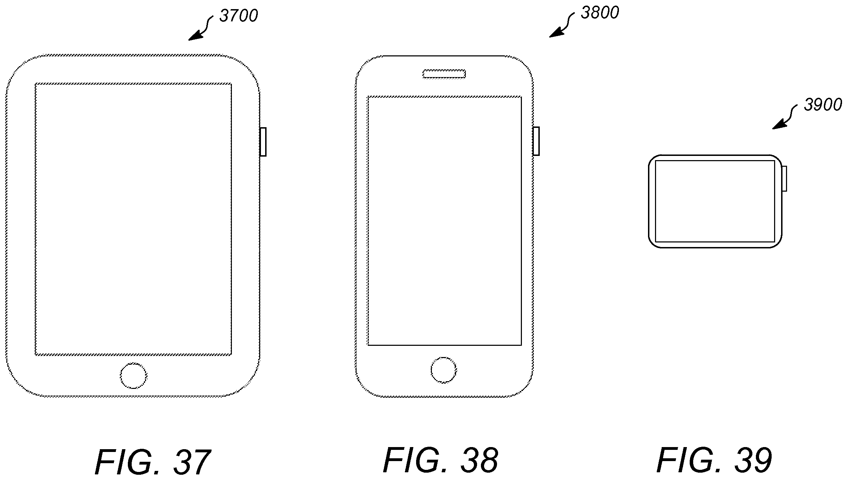

Computing system 3600 is not limited to the components and configuration of FIG. 36, but can include other or additional components in multiple configurations. In some embodiments, system 3600 can form personal electronic device 3700, which is a tablet, as shown in FIG. 37. In some embodiments, computing system 3600 can form personal electronic device 3800, which is a mobile phone, as shown in FIG. 38. In some embodiments, computing system 3600 can form personal electronic device 3900, which is a portal music device, as shown in FIG. 39.

Although the disclosure and examples have been fully described with reference to the accompanying figures, it is to be noted that various changes and modifications will become apparent to those skilled in the art. Such changes and modifications are to be understood as being included within the scope of the disclosure and examples as defined by the appended claims.

**Claims**

1. A computer-implemented method, comprising:

   at an electronic device with a display and a touch-sensitive surface:

      displaying a plurality of application icons at different sizes including a first size and a second size that is smaller than the first size;
      detecting a swipe input on the touch-sensitive surface, and
      the method being **characterized by**: in response to detecting the swipe input, resizing a plurality of the application icons, including:

         in accordance with a determination that the swipe input is in a first direction:

            reducing a size of one or more application icons in the plurality of application icons that are within a predefined distance of a first edge of the display to the second size; and
            increasing a size of application icons closest to a second edge of the display so that the application icons closest to the second edge of the display are all larger than the second size, wherein at least one application icon in the plurality of application icons is displayed at the first size that is larger than the second size after increasing the size of the one or more application icons closest to the second edge of the display; and

         in accordance with a determination that the swipe input is in a second direction that is different from the first direction:

            reducing a size of one or more application icons in the plurality of application icons that are within the predefined distance of the second edge of the display to the second size; and
            increasing a size of application icons closest to the first edge of the display so that the application icons closest to the first edge of the display are all larger than the second size, wherein at least one application icon in the plurality of application icons is displayed at the first size that is larger than the second size after increasing the size of the one or more application icons closest to the first edge of the display.

2. The method of claim 1, further comprising:

   prior to detecting the swipe input on the touch-sensitive surface, displaying a first application icon of the plurality of application icons substantially centered relative to the display; and
   in accordance with a determination that the swipe input is in the first direction:

      cease displaying the first application icon of the plurality of application icons substantially centered relative to the display; and
      displaying a second application icon of the plurality of application icons different from the first application icon substantially centered relative to the display.

3. The method of claim 2, further comprising:

   prior to detecting the swipe input on the touch-sensitive surface, displaying a first application icon of the plurality of application icons larger relative to the remaining application icons of the plurality of application icons; and
   in accordance with a determination that the swipe input is in the first direction:

cease displaying the first application icon of the plurality of application icons larger relative to the remaining application icons of the plurality of application icons; and
displaying the second application icon of the plurality of application icons different from the first application icon larger relative to the remaining application icons of the plurality of application icons.

4. The method of claim 2, further comprising:

prior to detecting the swipe input on the touch-sensitive surface, displaying the first application icon of the plurality of application icons substantially centered relative to the display; and
in accordance with a determination that the swipe input is in the second direction:

cease displaying the first application icon of the plurality of application icons substantially centered relative to the display; and
displaying a third application icon of the plurality of application icons substantially centered relative to the display, wherein the third application icon is different from the first application icon and the second application icon.

5. The method of claim 3, further comprising:

prior to detecting the swipe input on the touch-sensitive surface, displaying the first application icon of the plurality of application icons larger relative to the remaining application icons of the plurality of application icons; and
in accordance with a determination that the swipe input is in the second direction:

cease displaying the first application icon of the plurality of application icons larger relative to the remaining application icons of the plurality of application icons; and
displaying a third application icon of the plurality of application icons larger relative to the remaining application icons of the plurality of application icons, wherein the third application icon is different from the first application icon and the second application icon.

6. The method of any one of claims 1-5, wherein the plurality of application icons correspond to a plurality of open applications on the electronic device.

7. The method of any one of claims 1-6, wherein the plurality of application icons correspond to a user-generated set of applications on the electronic device.

8. The method of any one of claims 1-7, wherein the electronic device is a wearable electronic device.

9. The method of any one of claims 1-8, further comprising:

receiving information representing an activity in an application, wherein the application corresponds to a displayed application icon; and
in response to the received information, altering an appearance of the displayed application icon.

10. The method of claim 9, wherein the altering is one or more of blinking, changing color, and animating.

11. An electronic device comprising:

one or more processors;
a memory;
a display; and
a touch-sensitive surface operatively coupled to the one or more processors; and
one or more programs, wherein the one or more programs are stored in the memory and
configured to be executed by the one or more processors, the one or more programs including instructions for performing the method of any of claims 1-10.

12. A computer-readable storage medium storing one or more programs configured to be executed by one or more processors of an electronic device with a display and a touch-sensitive surface, the one or more programs including instructions for performing the method of any of claims 1-10.

**Patentansprüche**

1. Computerimplementiertes Verfahren, umfassend:
   bei einer elektronischen Vorrichtung mit einer Anzeige und einer berührungsempfindlichen Oberfläche:

   Anzeigen einer Mehrzahl von Anwendungssymbolen in unterschiedlichen Größen, einschließlich einer ersten Größe und einer zweiten Größe, die kleiner als die erste Größe ist;
   Erkennen einer Wischeingabe auf der berührungsempfindlichen Oberfläche, und
   wobei das Verfahren **dadurch gekennzeichnet** ist: als Reaktion auf das Erkennen der Wischeingabe Anpassen der Größe einer Mehrzahl der Anwendungssymbole, umfassend:
   gemäß einer Feststellung, dass die Wischeingabe in einer ersten Richtung erfolgt:

   Verringern einer Größe eines oder mehrerer Anwendungssymbole der Mehrzahl von Anwendungssymbolen, die sich innerhalb eines vorgegebenen Abstands von einer ersten Kante der Anzeige befinden, auf die zweite Größe; und
   Vergrößern einer Größe der Anwendungssymbole, die einer zweiten Kante der Anzeige am nächsten liegen, sodass die Anwendungssymbole, die der zweiten Kante der Anzeige am nächsten liegen, alle größer als die zweite Größe sind, wobei mindestens ein Anwendungssymbol der Mehrzahl von Anwendungssymbolen nach dem Vergrößern der Größe des einen oder der mehreren Anwendungssymbole, die der zweiten Kante der Anzeige am nächsten liegen, in der ersten Größe angezeigt wird, die größer als die zweite Größe ist; und
   gemäß einer Feststellung, dass die Wischeingabe in einer zweiten Richtung erfolgt, die sich von der ersten Richtung unterscheidet:

   Verringern einer Größe eines oder mehrerer Anwendungssymbole der Mehrzahl von Anwendungssymbolen, die sich innerhalb des vorgegebenen Abstands von der zweiten Kante der Anzeige befinden, auf die zweite Größe; und
   Vergrößern einer Größe der Anwendungssymbole, die der ersten Kante der Anzeige am nächsten liegen, sodass die Anwendungssymbole, die der ersten Kante der Anzeige am nächsten liegen, alle größer als die zweite Größe sind, wobei mindestens ein Anwendungssymbol der Mehrzahl von Anwendungssymbolen nach dem Vergrößern der Größe des einen oder der mehreren Anwendungssymbole, die der ersten Kante der Anzeige am nächsten liegen, in der ersten Größe angezeigt wird, die größer als die zweite Größe ist.

2. Verfahren nach Anspruch 1, ferner umfassend:

   vor dem Erkennen der Wischeingabe auf der berührungsempfindlichen Oberfläche Anzeigen eines ersten Anwendungssymbols der Mehrzahl von Anwendungssymbolen im Wesentlichen zentriert relativ zur Anzeige; und
   gemäß einer Feststellung, dass die Wischeingabe in der ersten Richtung erfolgt:

   Beenden der Anzeige des ersten Anwendungssymbols der Mehrzahl von Anwendungssymbolen im Wesentlichen zentriert relativ zur Anzeige; und
   Anzeigen eines zweiten Anwendungssymbols der Mehrzahl von Anwendungssymbolen, das sich von dem ersten Anwendungssymbol unterscheidet, im Wesentlichen zentriert relativ zur Anzeige.

3. Verfahren nach Anspruch 2, ferner umfassend:

   vor dem Erkennen der Wischeingabe auf der berührungsempfindlichen Oberfläche Anzeigen eines ersten Anwendungssymbols der Mehrzahl von Anwendungssymbolen in einer größeren Größe relativ zu den verbleibenden Anwendungssymbolen der Mehrzahl von Anwendungssymbolen; und
   gemäß einer Feststellung, dass die Wischeingabe in der ersten Richtung erfolgt:

   Beenden der Anzeige des ersten Anwendungssymbols der Mehrzahl von Anwendungssymbolen in einer größeren Größe relativ zu den verbleibenden Anwendungssymbolen der Mehrzahl von Anwendungssymbolen; und
   Anzeigen des zweiten Anwendungssymbols der Mehrzahl von Anwendungssymbolen, das sich von dem ersten Anwendungssymbol unterscheidet, in einer größeren Größe relativ zu den verbleibenden Anwendungssymbolen der Mehrzahl von Anwendungssymbolen.

**EP 3 822 759 B1**

4. Verfahren nach Anspruch 2, ferner umfassend:

vor dem Erkennen der Wischeingabe auf der berührungsempfindlichen Oberfläche Anzeigen des ersten Anwendungssymbols der Mehrzahl von Anwendungssymbolen im Wesentlichen zentriert relativ zur Anzeige; und

gemäß einer Feststellung, dass die Wischeingabe in der zweiten Richtung erfolgt:

Beenden der Anzeige des ersten Anwendungssymbols der Mehrzahl von Anwendungssymbolen im Wesentlichen zentriert relativ zur Anzeige; und

Anzeigen eines dritten Anwendungssymbols der Mehrzahl von Anwendungssymbolen im Wesentlichen zentriert relativ zur Anzeige, wobei das dritte Anwendungssymbol sich von dem ersten Anwendungssymbol und dem zweiten Anwendungssymbol unterscheidet.

5. Verfahren nach Anspruch 3, ferner umfassend:

vor dem Erkennen der Wischeingabe auf der berührungsempfindlichen Oberfläche Anzeigen des ersten Anwendungssymbols der Mehrzahl von Anwendungssymbolen in einer größeren Größe relativ zu den verbleibenden Anwendungssymbolen der Mehrzahl von Anwendungssymbolen; und

gemäß einer Feststellung, dass die Wischeingabe in der zweiten Richtung erfolgt:

Beenden der Anzeige des ersten Anwendungssymbols der Mehrzahl von Anwendungssymbolen in einer größeren Größe relativ zu den verbleibenden Anwendungssymbolen der Mehrzahl von Anwendungssymbolen; und

Anzeigen eines dritten Anwendungssymbols der Mehrzahl von Anwendungssymbolen in einer größeren Größe relativ zu den verbleibenden Anwendungssymbolen der Mehrzahl von Anwendungssymbolen, wobei das dritte Anwendungssymbol sich von dem ersten Anwendungssymbol und dem zweiten Anwendungssymbol unterscheidet.

6. Verfahren nach einem der Ansprüche 1 bis 5, wobei die Mehrzahl von Anwendungssymbolen einer Mehrzahl von geöffneten Anwendungen auf der elektronischen Vorrichtung entspricht.

7. Verfahren nach einem der Ansprüche 1 bis 6, wobei die Mehrzahl von Anwendungssymbolen einer benutzergenerierten Menge von Anwendungen auf der elektronischen Vorrichtung entspricht.

8. Verfahren nach einem der Ansprüche 1 bis 7, wobei die elektronische Vorrichtung eine tragbare elektronische Vorrichtung ist.

9. Verfahren nach einem der Ansprüche 1 bis 8, ferner umfassend:

Empfangen von Informationen, die eine Aktivität in einer Anwendung repräsentieren, wobei die Anwendung einem angezeigten Anwendungssymbol entspricht; und

als Reaktion auf die empfangenen Informationen Verändern eines Erscheinungsbildes des angezeigten Anwendungssymbols.

10. Verfahren nach Anspruch 9, wobei das Verändern eines oder mehrere von Blinken, Farbänderung und Animation umfasst.

11. Elektronische Vorrichtung, umfassend:

einen oder mehrere Prozessoren;
einen Speicher;
eine Anzeige; und
eine berührungsempfindliche Oberfläche, die mit dem einen oder den mehreren Prozessoren operativ gekoppelt ist; und
ein oder mehrere Programme, wobei das eine oder die mehreren Programme in dem Speicher gespeichert und dazu konfiguriert sind, durch den einen oder die mehreren Prozessoren ausgeführt zu werden, wobei das eine oder die mehreren Programme Anweisungen zum Durchführen des Verfahrens nach einem der Ansprüche 1 bis 10 beinhalten.

14

12. Computerlesbares Speichermedium, auf dem ein oder mehrere Programme gespeichert sind, die dazu konfiguriert sind, durch einen oder mehrere Prozessoren einer elektronischen Vorrichtung mit einer Anzeige und einer berührungsempfindlichen Oberfläche ausgeführt zu werden, wobei das eine oder die mehreren Programme Anweisungen zum Durchführen des Verfahrens nach einem der Ansprüche 1 bis 10 beinhalten.

**Revendications**

1. Procédé mis en œuvre par ordinateur, comprenant :
au niveau d'un dispositif électronique avec un affichage et une surface sensible au toucher :

l'affichage d'une pluralité d'icônes d'application à différentes tailles comprenant une première taille et une deuxième taille qui est plus petite que la première taille ;
la détection d'une entrée de balayage sur la surface sensible au toucher, et
le procédé étant **caractérisé par** : en réponse à la détection de l'entrée de balayage, le redimensionnement d'une pluralité des icônes d'application, comprenant :
conformément à une détermination que l'entrée de balayage est dans une première direction :

la réduction d'une taille d'une ou plusieurs icônes d'application dans la pluralité d'icônes d'application qui sont à moins d'une distance prédéfinie d'un premier bord de l'affichage à la deuxième taille ; et
l'augmentation d'une taille d'icônes d'application les plus proches d'un deuxième bord de l'affichage de sorte que les icônes d'application les plus proches du deuxième bord de l'affichage soient toutes plus grandes que la deuxième taille, dans lequel au moins une icône d'application dans la pluralité d'icônes d'application est affichée à la première taille qui est plus grande que la deuxième taille après l'augmentation de la taille des une ou plusieurs icônes d'application les plus proches du deuxième bord de l'affichage ; et
conformément à une détermination que l'entrée de balayage est dans une deuxième direction qui est différente de la première direction :

la réduction d'une taille d'une ou plusieurs icônes d'application dans la pluralité d'icônes d'application qui sont à moins d'une distance prédéfinie du deuxième bord de l'affichage à la deuxième taille ; et
l'augmentation d'une taille d'icônes d'application les plus proches du premier bord de l'affichage de sorte que les icônes d'application les plus proches du premier bord de l'affichage soient toutes plus grandes que la deuxième taille, dans lequel au moins une icône d'application dans la pluralité d'icônes d'application est affichée à la première taille qui est plus grande que la deuxième taille après l'augmentation de la taille des une ou plusieurs icônes d'application les plus proches du premier bord de l'affichage.

2. Procédé selon la revendication 1, comprenant en outre :

avant la détection de l'entrée de balayage sur la surface sensible au toucher, l'affichage d'une première icône d'application de la pluralité d'icônes d'application de manière substantiellement centrée par rapport à l'affichage ; et
conformément à une détermination que l'entrée de balayage est dans la première direction :

l'interruption de l'affichage de la première icône d'application de la pluralité d'icônes d'application de manière substantiellement centrée par rapport à l'affichage ; et
l'affichage d'une deuxième icône d'application de la pluralité d'icônes d'application différente de la première icône d'application de manière substantiellement centrée par rapport à l'affichage.

3. Procédé selon la revendication 2, comprenant en outre :

avant la détection de l'entrée de balayage sur la surface sensible au toucher, l'affichage d'une première icône d'application de la pluralité d'icônes d'application plus grande par rapport aux icônes d'application restantes de la pluralité d'icônes d'application ; et
conformément à une détermination que l'entrée de balayage est dans la première direction :

l'interruption de l'affichage de la première icône d'application de la pluralité d'icônes d'application plus grande par rapport aux icônes d'application restantes de la pluralité d'icônes d'application ; et
l'affichage de la deuxième icône d'application de la pluralité d'icônes d'application différente de la première icône d'application plus grande par rapport aux icônes d'application restantes de la pluralité d'icônes d'application.

4. Procédé selon la revendication 2, comprenant en outre :

avant la détection de l'entrée de balayage sur la surface sensible au toucher, l'affichage de la première icône d'application de la pluralité d'icônes d'application de manière substantiellement centrée par rapport à l'affichage ; et
conformément à une détermination que l'entrée de balayage est dans la deuxième direction :

l'interruption de l'affichage de la première icône d'application de la pluralité d'icônes d'application de manière substantiellement centrée par rapport à l'affichage ; et
l'affichage d'une troisième icône d'application de la pluralité d'icônes d'application de manière substantiellement centrée par rapport à l'affichage, dans lequel la troisième icône d'application est différente de la première icône d'application et de la deuxième icône d'application.

5. Procédé selon la revendication 3, comprenant en outre :

avant la détection de l'entrée de balayage sur la surface sensible au toucher, l'affichage de la première icône d'application de la pluralité d'icônes d'application plus grande par rapport aux icônes d'application restantes de la pluralité d'icônes d'application ; et
conformément à une détermination que l'entrée de balayage est dans la deuxième direction :

l'interruption de l'affichage de la première icône d'application de la pluralité d'icônes d'application plus grande par rapport aux icônes d'application restantes de la pluralité d'icônes d'application ; et
l'affichage d'une troisième icône d'application de la pluralité d'icônes d'application plus grande par rapport aux icônes d'application restantes de la pluralité d'icônes d'application, dans lequel la troisième icône d'application est différente de la première icône d'application et de la deuxième icône d'application.

6. Procédé selon l'une quelconque des revendications 1 à 5, dans lequel la pluralité d'icônes d'application correspond à une pluralité d'applications ouvertes sur le dispositif électronique.

7. Procédé selon l'une quelconque des revendications 1 à 6, dans lequel la pluralité d'icônes d'application correspond à un ensemble d'applications généré par l'utilisateur sur le dispositif électronique.

8. Procédé selon l'une quelconque des revendications 1 à 7, dans lequel le dispositif électronique est un dispositif électronique vestimentaire.

9. Procédé selon l'une quelconque des revendications 1 à 8, comprenant en outre :

la réception d'informations représentant une activité dans une application, dans lequel l'application correspond à une icône d'application affichée ; et
en réponse aux informations reçues, la modification d'un aspect de l'icône d'application affichée.

10. Procédé selon la revendication 9, dans lequel la modification est une ou plusieurs parmi un clignotement, un changement de couleur et une animation.

11. Dispositif électronique comprenant :

un ou plusieurs processeurs ;
une mémoire ;
un affichage ; et
une surface sensible au toucher couplée de manière opérationnelle aux un ou plusieurs processeurs ; et
un ou plusieurs programmes, dans lequel les un ou plusieurs programmes sont stockés dans la mémoire et configurés pour être exécutés par les un ou plusieurs processeurs, les un ou plusieurs programmes comprenant des instructions pour réaliser le procédé selon l'une quelconque des revendications 1 à 10.

12. Support de stockage lisible par ordinateur stockant un ou plusieurs programmes configurés pour être exécutés par un ou plusieurs processeurs d'un dispositif électronique avec un affichage et une surface sensible au toucher, les un ou plusieurs programmes comprenant des instructions pour réaliser le procédé selon l'une quelconque des revendications 1 à 10.

100 ─↘
Device

Strap 104 ─┐        ┌─ 102
                              Body

106 ─┐
Display

112 ─
Button

                    108

114 ─
Button                      110
                            Button

Strap 104 ─

**FIG. 1**

100 ─↘
Device

12:53
Tuesday March 12

204 ─
208 ─
                    108

                    206

                    200
                    Screen

**FIG. 2**

100 ⌁
Device

FIG. 3

100 ⌁
Device

FIG. 4

FIG. 5

FIG. 6

100
Device

108

702
Direction

704
Icon

Tuesday, March 12

700
Screen

**FIG. 7**

100
Device

108

802
Direction

Alarm

6:30 a    on

2:15 p    off

7:45 p    off

804
App

**FIG. 8**

**FIG. 9**

**FIG. 10**

100 ⟍
Device

108

1106 Icon

1104
Invisible Circle

1102
Invisible Circle

10:45

**FIG. 11**

100 ⟍
Device

108

| A | B | C |
|---|---|---|
| D | E | F |
| G | H | I |

1204
Icon

1202
Grid

**FIG. 12**

100
Device

108

A    B    C

1302
Direction

C

1204

1306
Movement

**FIG. 13**

100
Device

108

A      B

C      D

1204

1402

**FIG. 14**

FIG. 15

FIG. 16

FIG. 17

FIG. 18

100
Device

108

A B C

D E F

G H I

1902
Direction

**FIG. 19**

100
Device

108

A B

D E

2002
Grid

**FIG. 20**

Grid
2102

108

2110
Direction

2106

Tuesday Mar.12

Grid
2102

2108
Tap

2106

**FIG. 21**

Grid
2202

108

2204
Tilt

| A | B | C |
| F | G | H |
| K | L | M |

| B | C |
| G | H |
| L | M |

2206
Icon Movement

Grid
2208

108

108

| B | C | D |
| G | H | I |
| L | M | N |

**FIG. 22**

EP 3 822 759 B1

FIG. 23

Swipe Direction 2404

Uncompressed icons 2408

2402

Compressed right-boundary icons 2410

Compressed left-boundary icons 2412

2406 Swipe Direction

**FIG. 24**

EP 3 822 759 B1

Group 2512

Tap 2514

Icon 2516

2502 Grid

2506 Grid

**FIG. 25A**

EP 3 822 759 B1

2510
Tap

Icon
2516

2506
Grid

Alarm          Timer

Stop
Watch          Time

2520
Functions

2510
App

**FIG. 25B**

Grid 2610

B

Grid 2606

A

Direction 2604

Swipe Direction 2608

2600 Grid

2602 Wallpaper

FIG. 26

**FIG. 27**

EP 3 822 759 B1

100
Device

108

Grid
2802

2804

**FIG. 28**

100
Device

2902

Volume

**FIG. 29**

FIG. 30

EP 3 822 759 B1

**FIG. 31**

**FIG. 32**

**FIG. 33**

108

3102

3104
Direction

3106
Direction

3204
Icon

3206
Thumbnail

3202
List

3302

108

EP 3 822 759 B1

100
Device

3400
outer circle

3402
inner circle

3404
Icon

3408
Icon

**FIG. 34**

EP 3 822 759 B1

```
                              ┌─────────────┐  ⌐ 3510
                              │ OBTAIN INPUT│
                              │  BASED ON   │                    ⌐ 3500
                              │   CROWN     │
                              └─────────────┘
                                    │
                                    ▼
                              ◇─────────────◇  ⌐ 3520
                        ┌─────  MOVE TYPE?  ─────┐
                        │     ◇─────────────◇    │
   CROWN                │            │           │   CROWN
   ROTATION             │            │           │   TOUCH
                        ▼            │ CROWN      ▼
                  ┌─────────────┐    │ PUSH/
                  │DETERMINE    │⌐3530│ PULL
                  │Z-AXIS       │    │
                  │ADJACENT     │    │
                  │PLANE        │    │
                  └─────────────┘    │
                        │            ▼
                        ▼      ┌─────────────┐⌐3550  ┌─────────────┐⌐3560
                  ┌─────────────┐│DISPLAY HOME │      │DISPLAY      │
                  │DISPLAY SCREEN│SCREEN       │      │CONTEXT      │
                  │CORRESPONDING │              │      │INFO         │
                  │TO ADJ. PLANE │              │      │             │
                  └─────────────┘└─────────────┘      └─────────────┘
                        ⌐3540
```

*FIG. 35*

*FIG. 36*

*FIG. 37*     *FIG. 38*     *FIG. 39*

FIG. 40

FIG. 41

100
Device

Group
4204

Group
4206

Grid
4202

FIG. 42

**EP 3 822 759 B1**

REFERENCES CITED IN THE DESCRIPTION

**Patent documents cited in the description**

- JP 2012252384 A
- WO 2009084368 A1
- US 2013135234 A1
- US 2011047491 A1
- US 2012162261 A1